# EUROPEAN PATENT SPECIFICATION

(11) **EP 1 967 557 B1**
(45) Date of publication and mention of the grant of the patent: **29.02.2012**
(21) Application number: 06823315.4
(22) Date of filing: 10.11.2006
(51) Int. Cl.: C09D 11/00, B41J 2/01, B41M 5/00

(54) **Active energy beam-curable inkjet ink**
Mittels Aktiv-Energie-Strahlung härtbare Tintenstrahl-Tinte
Encre pour jet d'encre à séchage par faisceau d'energie active

(30) Priority: 11.11.2005 JP 2005327134
(43) Date of publication of application: 10.09.2008
(73) Proprietor: TOYO INK MFG. CO., LTD., Tokyo 104-0031 (JP)
(72) Inventor: NISHIDA, Daisuke, Tokyo 104-0031 (JP); JONAI, Kazuhiro, Tokyo 104-0031 (JP); YOSHIHIRO, Yasuo, Tokyo 104-0031 (JP); TAKAHASHI, Yukitoshi, Tokyo 104-0031 (JP)
(74) Representative: Bauch-Koepe, Katharina Anna
(86) International application number: PCT/JP2006/322493
(87) International publication number: WO 2007/055333

(56) References cited:
- WO-A1-2004/009651
- WO-A1-2004/092287
- WO-A1-2004/092287
- WO-A1-2005/026270
- WO-A1-2005/026270
- WO-A2-2005/035670
- JP-A- 2001 311 022
- JP-A- 2002 241 647
- JP-A- 2002 509 161
- JP-A- 2003 213 170
- JP-A- 2005 154 537
- JP-A- 2006 152 278
- JP-A- 2006 282 757
- JP-A- 2006 307 152

## Description

### TECHNICAL FIELD

The present invention relates to an active energy beam-curable inkjet ink that exhibits excellent stretch properties and is free from blocking.

### BACKGROUND ART

Conventionally, active energy beam-curable inks have been supplied to, and used in, offset, silk screen and top coat materials, and in recent years, the quantity used of these active energy beam-curable inks used has continued to increase, as such inks enable a simplified drying process and reduced workspace that yields reduced costs, and also offer the environmental advantage of enabling a reduction in the volume of volatilized solvents. Of these inks, inkjet inks are widely used in both water-based and solvent-based forms, with the applications of these two forms of ink determined in accordance with their respective properties, but their use in industrial applications faces a variety of problems, including restrictions on the receiving substrate, comparatively poor water resistance, a large quantity of energy required for drying the ink, and adhesion of ink components to the print head upon drying, and as such, replacement of these inks with active energy beam-curable inks of comparatively low volatility has been anticipated.

However, although the cured films generated by conventional active energy beam-curable inks are hard, they are often brittle. Furthermore, a cured film in which the glass transition temperature has simply been lowered to room temperature or lower in order to improve the stretch properties such as bending suffers from reduced abrasion resistance and rub resistance as a result of a dramatic reduction in the cured film hardness, meaning handling of the film during production is difficult, and the quality of the final product precludes its use. Despite active energy beam-curable inks being viewed as potential replacements, large-scale adoption of such inks has not yet occurred because all active energy beam-cured films are markedly inferior to those produced from conventional solvent-based inks in terms of their stretch properties, in high-level applications that required forming process. Furthermore, these circumstances also apply to current active energy beam-curable inkjet inks, and moreover, the viscosity must be restricted to not more than several tens of cps in order to ensure stable discharge of the inkjet, and monomers must be selected that do not corrode the head members. Accordingly, the monomers that can be added to the ink are severely limited, meaning inks that are able to satisfy a wide variety of requirements are currently not available.

In Japanese Patent Laid-Open No. H06-184484, a test is conducted that uses a combination of a monofunctional monomer and a urethane oligomer in order to impart favorable stretch properties to the ink. However, although the formulation exhibits satisfactory stretch properties, because a high-viscosity oligomer is used, inkjet discharge is problematic, and the temperature needs to be raised dramatically to achieve discharge, which may cause damage to the head periphery.

In Japanese Patent Laid-Open No. 2002-167537, the development of inks containing oligomers is tested as a way of improving curability. In this patent publication, because the use of a high molecular weight oligomer causes a reduction in the crosslinking density within the ink, a large quantity of a polyfunctional monomer is used to ensure favorable levels of solvent resistance and rub resistance. However, as a result of including a large quantity of a polyfunctional monomer, satisfactory stretch properties cannot be obtained for the cured film.

In Japanese Patent Laid-Open No. 2002-241647, a test is conducted in which a photopolymerization initiator is added to a formulation containing a comparatively large quantity of a polyfunctional monomer in order to improve the reactivity of the ink. However, when the initiator is applied to an ink of the present invention containing a large quantity of a monofunctional monomer, a satisfactory effect on blocking cannot be obtained.
The document WO 2004/092,287 relates to a process for preparing an inkjet printed matter, which comprises the steps of applying an ultraviolet curable inkjet ink composition comprising a photopolymerizable monomer, oligomer or prepolymer, a colorant and a compound having an alpha-hydroxy ketone structure to a recording medium and curing the ink composition on the recording medium by irradiation with UV rays.
The document WO 2005/026,270 relates to a radiation-curable jet ink comprising at least 65 % by weight of one or more monofunctional ethylenically unsaturated monomer(s) and also comprising at least one tri-or higher functional ethylenically unsaturated monomer, and having a surface tension at 25 °C of not more than 36 dynes/cm.

In this manner, inks with superior stretch properties obtained using conventional technology suffer significant problems when used in practical applications, including residual tack on the printed surface even after curing, and the occurrence of blocking of printed items when printed items are stacked together, or if the items are forcibly peeled apart, the presence of residues on the printed items, causing a loss of attractiveness.

Accordingly, in technical fields that require molding process, an ink that exhibits excellent stretch properties and is free from blocking has been sought. The expression "free from blocking" does not simply mean that the film cures, but means that when a printing substrate is superimposed on top of the cured film, and pressure is then applied under conditions including a linear pressure of 11.5 kgf/cm² and a rate of 0.3 m/min., the cured film can still be removed, and no transfer of the cured film to the printing substrate occurs.

### DISCLOSURE OF INVENTION

The present invention has an object of providing an active energy beam-curable ink for inkjet printing that is capable of producing a printed that exhibits excellent stretch properties and is free from blocking.

In other words, the present invention relates to an active energy beam-curable inkjet ink comprising a polymerizable monomer and a photopolymerization initiator, wherein the polymerizable monomer comprises at least 50% by weight of a monofunctional monomer, and the photopolymerization initiator comprises an initiator represented by [formula 1] shown below.

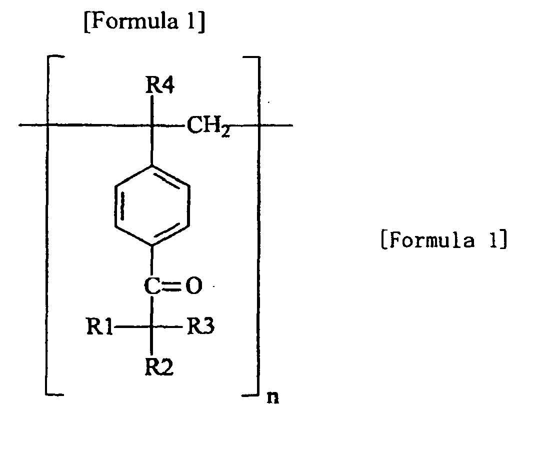

(wherein, R1, R2, R3 and R4 each represent, independently, a hydrogen atom, halogen atom, hydroxyl group, amino group, alkyl group, alkoxy group or phenyl group, and n represents an integer from 2 to 10).

The present invention also relates to the above active energy beam-curable inkjet ink, wherein the photopolymerization initiator is oligo(2-hydroxy-2-methyl-1-(4-(1-methylvinyl)phenyl)propanone).

Moreover, the present invention also relates to the above active energy beam-curable inkjet ink, wherein the quantity of the photopolymerization initiator, relative to the quantity of the polymerizable monomer, is within a range from 2 to 20% by weight.

Moreover, the present invention also relates to the above active energy beam-curable inkjet ink, further comprising a second photopolymerization initiator having an absorption peak within a wavelength range from 350 to 395 nm.

Furthermore, the present invention also relates to the above active energy beam-curable inkjet ink, wherein the second photopolymerization initiator is 2,4,6-trimethylbenzoyldiphenylphosphine oxide or bis(2,4,6-trimethylbenzoyl)-phenylphosphine oxide.
The present invention also relates to the above active energy beam-curable inkjet ink, which further comprises a photopolymerization initiator represented by the formula (2) shown below, 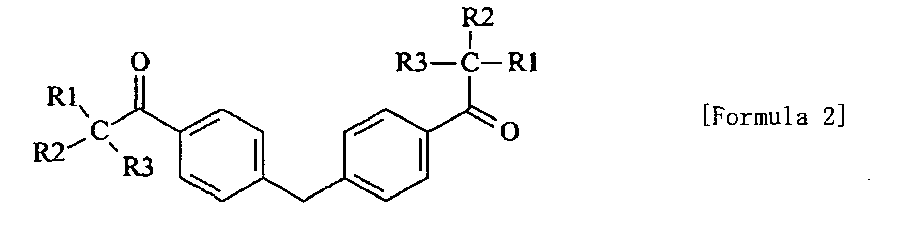 (wherein, R1, R2 and R3 each represent, independently, a hydrogen atom, halogen atom, hydroxyl group, amino group, alkyl group, alkoxy group or phenyl group).
The present invention also relates to the above active energy beam-curable inkjet ink, wherein the photopolymerization initiator further comprised is 2-hydroxy-1-(4-(4-(2-hydroxy-2-methyl-propionyl)-benzyl)-phenyl)-2-methylpropan-1-one.

Moreover, the present invention also relates to the above active energy beam-curable inkjet ink, wherein the ink further comprises 2-benzyl-2-dimethylamino-1-(4-morpholinophenyl)-butanone-1.

Furthermore, the present invention also relates to the above active energy beam-curable inkjet ink, wherein the polymerizable monomer comprises at least 30% by weight of 2-phenoxyethyl acrylate.

Furthermore, the present invention also relates to the above active energy beam-curable inkjet ink, wherein the polymerizable monomer comprises from 5 to 30% by weight of N-vinyl-2-caprolactam.

Moreover, the present invention also relates to a printed item obtained by printing the above active energy beam-curable inkjet ink onto a printing substrate.

This Application is related to the subject matter disclosed in prior Japanese Application 2005-327134 filed on November 11, 2005; the entire contents of which are incorporated by reference herein.

### BEST MODE FOR CARRYING OUT THE INVENTION

The polymerizable monomer in the present invention refers to an active energy beam-curable reaction component, and refers specifically to molecules containing an ethylenic unsaturated double bond.

In the present invention, the polymerizable monomer comprises at least 50% by weight of a monofunctional monomer. If the blend quantity of the monofunctional monomer is less than 50% by weight, then the stretch properties of the cured film deteriorate markedly. In those cases the cured film requires a high degree of stretchability, such as applications that involve post-printing processing, the blend quantity of the monofunctional monomer is preferably 70% or greater. Furthermore, when even greater stretchability is required, the blend quantity of the monofunctional monomer is preferably 80% by weight or greater.

Specific examples of the monofunctional monomer include cyclohexyl acrylate, tetrahydrofurfuryl acrylate, benzyl acrylate, methylphenoxyethyl acrylate, 4-t-butylcyclohexyl acrylate, caprolactone-modified tetrahydrofurfuryl acrylate, tribromophenyl acrylate, ethoxylated tribromophenyl acrylate, 2-phenoxyethyl acrylate (or phenoxypolyethylene glycol acrylate, phenoxypolypropylene glycol acrylate or phenoxypolyethylene-polypropylene glycol acrylate), acryloylmorpholine, isobornyl acrylate, phenoxydiethylene glycol acrylate, vinylcaprolactam, vinylpyrrolidone, 2-hydroxy-3-phenoxypropyl acrylate, 1,4-cyclohexanedimethanol monoacrylate, 2-hydroxyethyl acrylate, 2-hydroxypropyl acrylate, 4-hydroxybutyl acrylate, isobutyl acrylate, t-butyl acrylate, isooctyl acrylate, 2-methoxyethyl acrylate, methoxytriethylene glycol acrylate, 2-ethoxyethyl acrylate, 3-methoxybutyl acrylate, ethoxyethoxyethyl acrylate, butoxyethyl acrylate, ethoxydiethylene glycol acrylate, methoxydipropylene glycol acrylate, dipropylene glycol acrylate, β-carboxyethyl acrylate, ethyl diglycol acrylate, trimethylolpropane formal monoacrylate, imide acrylate, isoamyl acrylate, ethoxylated succinic acid acrylate, trifluoroethyl acrylate, ω-carboxypolycaprolactone monoacrylate and N-vinylformamide, although this is not an exhaustive list.

In the present invention, of the above monofunctional monomers, the use of monomers such as 2-phenoxyethyl acrylate, which enhances the adhesion to the substrate and also exhibits suitable stretchability, vinylcaprolactam, which enhances the adhesion to the substrate and also increases the hardness of the cured film at room temperature, isobornyl acrylate, which increases the hardness of the cured film and is useful in those cases where the viscosity of the ink needs to be lowered, 2-hydroxy-3-phenoxypropyl acrylate, which contributes to an improvement in the flexibility, and 1,4-cyclohexanedimethanol monoacrylate, which contributes to an improvement in the adhesion to the substrate and an improvement in the flexibility, is particularly preferred. Furthermore, if the blend quantity of 2-phenoxyethyl acrylate is less than 30% by weight of the polymerizable monomer, then the adhesion to the substrate weakens, which is undesirable. Moreover, if the blend quantity of vinylcaprolactam is less than 5% by weight of the polymerizable monomer, then the reactivity of the cured film deteriorates, causing a worsening of the adhesion to the substrate, whereas if the quantity of vinylcaprolactam exceeds 30% by weight, then the stability of the ink viscosity worsens, which is undesirable.

Furthermore, specific examples of the polyfunctional monomer include dimethyloltricyclodecane diacrylate, propoxylated bisphenol A di(meth)acrylate, ethoxylated bisphenol A di(meth)acrylate, cyclohexanedimethanol di(meth)acrylate, dimethyloldicyclopentane diacrylate, ethoxylated isocyanuric acid triacrylate, tri(2-hydroxyethyl isocyanurate) triacrylate, tri(meth)allyl isocyanurate, ethylene glycol di(meth)acrylate, diethylene glycol di(meth)acrylate, polyethylene glycol di(meth)acrylate, 1,6-hexanediol di(meth)acrylate, ethoxylated 1,6-hexanediol diacrylate, neopentyl glycol di(meth)acrylate, polypropylene glycol diacrylate, 1,4-butanediol di(meth)acrylate, 1,9-nonanediol diacrylate, tetraethylene glycol diacrylate, 2-n-butyl-2-ethyl-1,3-propanediol diacrylate, hydroxypivalic acid neopentyl glycol diacrylate, 1,3-butylene glycol di(meth)acrylate, trimethylolpropane triacrylate, hydroxypivalic acid trimethylolpropane triacrylate, ethoxylated phosphoric acid triacrylate, ethoxylated tripropylene glycol diacrylate, neopentyl glycol-modified trimethylolpropane diacrylate, stearic acid-modified pentaerythritol diacrylate, pentaerythritol triacrylate, tetramethylolpropane triacrylate, tetramethylolmethane triacrylate, pentaerythritol tetraacrylate, caprolactone-modified trimethylolpropane triacrylate, propoxylated glyceryl triacrylate, tetramethylolmethane tetraacrylate, pentaerythritol tetraacrylate, ditrimethylolpropane tetraacrylate, ethoxylated pentaerythritol tetraacrylate, dipentaerythritol hexaacrylate, caprolactone-modified dipentaerythritol hexaacrylate, dipentaerythritol hydroxypentaacrylate, neopentyl glycol oligoacrylate, 1,4-butanediol oligoacrylate, 1,6-hexanediol oligoacrylate, trimethylolpropane oligoacrylate, pentaerythritol oligoacrylate, ethoxylated neopentyl glycol di(meth)acrylate, propoxylated neopentyl glycol di(meth)acrylate, tripropylene glycol di(meth)acrylate, ethoxylated trimethylolpropane triacrylate and propoxylated trimethylolpropane triacrylate, although this is not an exhaustive list.

These monofunctional monomers and polyfunctional monomers may be used either alone, or if required, in combinations of two or more different monomers.

An ink comprising a photopolymerization initiator represented by the [formula 1], and optionally in addition of [formula 2], of the present invention has a favorable curing rate, and is effective in producing printed items that are free from blocking.
Photopolymerization initiators typically contain one cleavable portion, but because the photopolymerization initiator used in the present invention contains two or more cleavable portions, following cleavage by irradiation with the active energy beam, the initiator is able to react with the polymerizable monomer at a plurality of locations, enabling the molecular weight of the polymerization reaction products within the cured film to be increased. Blocking is thought to be caused when large quantities of unreacted monomers, or molecules such as dimers and trimers that are formed when the polymerization is halted at a low molecular weight, are retained within the cured film. As a result, by using a photopolymerization initiator with two or more cleavable portions as the photopolymerization initiator, and thereby increasing the molecular weight of the polymerization reaction products within the cured film, printed items that are free from blocking can be obtained.
Photopolymerization initiators can be classified as either intramolecular bond cleavage initiators or intermolecular hydrogen abstraction initiators. The photopolymerization initiators represented by the [formula 1] or [formula 2] of the present invention are classified as acetophenone series, which account for the majority of intramolecular bond cleavage initiators, and compared with intermolecular hydrogen abstraction initiators, undergo more rapid polymerization, suffer minimal yellowing as a result of photooxidation, and exhibit favorable storage stability.

Specific examples of photopolymerization initiators represented by the [formula ] or [formula 2] of the present invention include oligo(2-hydroxy-2-methyl-1-(4-(1-methylvinyl)phenyl)propanone) and 2-hydroxy-1-(4-(4-(2-hydroxy-2-methyl-propionyl)-benzyl)-phenyl)-2-methylpropan-1-one, although this is not an exhaustive list. Furthermore, the photopolymerization initiator may use either a single compound, or a combination of two or more different compounds. For example, depending on the type of pigment or the types of monomers within the ink, using a combination of a photopolymerization initiator represented by the [formula 1] and a photopolymerization initiator represented by the [formula 2] may provide a dramatic increase in the curing rate.

The quantity of the photopolymerization initiator relative to the quantity of the polymerizable monomer is preferably within a range from 2 to 20% by weight. If the quantity is less than 2% by weight, then the curing rate worsens markedly, whereas if the quantity exceeds 20% by weight, then not only does the curing rate not vary from the case where the quantity is 10% by weight, but undissolved residues may occur, and even if heat is applied to dissolve these undissolved residues, the viscosity of the ink increases, causing a deterioration in the inkjet discharge properties.

The present invention preferably also comprises a second photopolymerization initiator having an absorption peak within a wavelength range from 350 to 395 nm.
By utilizing light to the long wavelength side of the light absorbed by the photopolymerization initiator represented by the [formula 1] or [formula 2], the depth to which the irradiated light is able to penetrate is increased, thereby accelerating the curing within the interior of the film. Of the various possibilities, using a photopolymerization initiator having an absorption peak within the wavelength range specified above resulted in a favorable increase in the curing rate.

The absorption spectrum is measured by dissolving the photopolymerization initiator in acetonitrile at a concentration of 0.1 % by weight, and then using a 1 cm quartz cell to measure the absorption with a spectrophotometer (U-3300, manufactured by Hitachi, Ltd.). The absorption peak described in the present invention refers to a peak with an absorbance of 0.5 or greater under the above measurement conditions. Acylphosphine oxide-based photopolymerization initiators often have an absorption peak with an intensity of 0.5 or greater in the wavelength band from 350 to 395 nm under the above measurement conditions, and are most preferred as the second photopolymerization initiator.

Examples of the second photopolymerization initiator include 2,4,6-trimethylbenzoyldiphenylphosphine oxide and bis(2,4,6-trimethylbenzoyl)-phenylphosphine oxide, although this is not an exhaustive list. Furthermore, this photopolymerization initiator may use either a single compound, or a combination of two or more compounds.

Moreover, in the ink of the present invention, including 2-benzyl-2-dimethylamino-1-(4-morpholinophenyl)-butanone-1 in addition to the second photopolymerization initiator produces a marked improvement in the curing rate. This photopolymerization initiator combination yields a dramatic improvement in the curing rate, but also produces yellowing, and therefore if used within a clear ink or white ink, addition of a quantity exceeding 5% may result in a change in the coloring of the coating following a weather resistance test.

In those cases where particularly superior stretch properties are required, a bifunctional monomer is preferably used as the polyfunctional monomer.

The active energy beam in the present invention refers to ultraviolet radiation. Specific examples include the energy beam irradiated from a metal halide lamp, high-pressure mercury lamp or electrodeless ultraviolet lamp or the like, although this is not an exhaustive list.

The ink described in the present invention refers to a liquid that is printed or coated onto a substrate surface.
In those cases where this ink contains no coloring components, the ink can be used in coating applications. Both single-layer coating, and layered coating that is performed together with an ink that comprises the type of coloring component described below can be conducted. Furthermore, in order to impart the cured film with superior hardness, durability such as abrasion resistance, molding properties, or design features such as a controlled level of luster, various fillers or resin components may also be added to the ink. Examples of fillers include extender pigments such as calcium carbonate, barium sulfate, spherical silica and hollow silica, as well as resin beads and the like. There are no particular restrictions on the resin components, provided the resin is inactive upon irradiation with the active energy beam, and examples of suitable resins include polyurethane resins, vinyl chloride-based resins (such as polyvinyl chloride resins and vinyl chloride-vinyl acetate copolymers), ethylene-vinyl acetate copolymers, polyester resins, poly(meth)acrylate resins, polyketone resins, polyvinyl-based resins (such as polyvinylacetal resins, polyvinylbutyral resins and polyvinylpyrrolidone resins), and cellulose-based resins (such as CAB resins and CAP resins). In those cases where these types of fillers or resin components are added, the types of materials added and the blend quantities are preferably determined with due consideration of the resulting inkjet suitability. When the ink is used for a coating application, other printing methods such as silk screen printing, gravure printing or offset printing, or other coating methods such as spray coating may also be used. In the case of a layered coating process performed together with an ink that comprises a coloring component, a coating material other than the ink of the present invention that is used in typical printing applications such as silk screen printing, gravure printing or offset printing may be layered on top of an ink layer comprising a colorant of the present invention, a separately molded coating layer (such as a film) may be transferred by lamination, or layering may be conducted using a spray coating material.

On the other hand, in those cases where the ink of the present invention comprises a coloring component, the ink can be used as a material for displaying graphics, lettering or photographs or the like. Conventionally, dyes or pigments are the most widely used coloring components, and for reasons of weather resistance in particular, pigments are the more widely used. Of the various pigment components, specific examples of carbon blacks include "Special Black 350, 250, 100, 550, 5, 4, 4A and 6", and "Printex U, V, 140U, 140V, 95, 90, 85, 80, 75, 55, 45, 40, P, 60, L6, L, 300, 30, 3, 35, 25, A and G", all manufactured by Degussa AG, "REGAL 400R, 660R, 330R and 250R", and "MOGUL E and L", all manufactured by Cabot Corporation, and "MA 7, 8, 11, 77, 100, 100R, 100S, 220 and 230", and "#2700, #2650, #2600, #200, #2350, #2300, #2200, #1000, #990, #980, #970, #960, #950, #900, #850, #750, #650, #52, #50, #47, #45, #45L, #44, #40, #33, #332, #30, #25, #20, #10, #5, CF9, #95 and #260", all manufactured by Mitsubishi Chemical Corporation. Furthermore, in the present invention, yellow, magenta and cyan inks, or inks of other colors such as white, can use the types of pigments employed in the inks for typical printing applications and coating material applications, and these pigments may be selected as required in accordance with factors such as their coloring properties and light resistance.

The proportion of the pigment relative to the total weight of the ink, is preferably within a range from 0.2 to 15 parts by weight of a yellow, magenta, cyan or black organic pigment per 100 parts by weight of the ink, or in the case of white titanium oxide, is preferably within a range from 5 to 40 parts by weight per 100 parts by weight of the ink.

Furthermore, the ink of the present invention may also include a dispersant for improving the dispersibility of the filler and pigment, and other additives for imparting various functions to the ink.
A multitude of dispersants exist, including polymer dispersants and low molecular weight dispersants, and these can be selected in accordance with the dispersibility required. Pigment derivatives can also be used as dispersion assistants. Furthermore, examples of additives that may be used include conventionally used wetting modifiers, surface tension modifiers, antifoaming agents, slipping agents, anti-blocking agents, or ultraviolet light inhibitors. These dispersants, dispersion assistants and additives may be selected in accordance with the intended application, and no particular restrictions are specified within the present invention.

In the present invention, the term "oligo" refers to a molecule with 2 to 10 repeating units.

In the present invention, a polymerization inhibitor such as hydroquinone, p-methoxyphenol, t-butylcatechol, pyrogallol or butylhydroxytoluene is preferably added in a quantity within a range from 0.01 to 5% by weight in order to enhance the stability of the ink viscosity over time, and improve the stability of the ink within a recording apparatus.

The active energy beam-curable inkjet ink of the present invention may also use one or more plasticizers, surface modifiers, ultraviolet light inhibitors, photostabilizers, or antioxidants such as dibutylhydroxytoluene as required.

The ink of the present invention is printed onto a printing substrate using an inkjet discharge apparatus. There are no particular restrictions on the printing substrates that can be used with the present invention, and suitable substrates include plastic substrates such as polycarbonate, hard vinyl chloride, soft vinyl chloride, polystyrene, foamed styrol, PMMA, polypropylene, polyethylene and PET, mixtures or modified products of these plastics, as well as glass, metal substrates such as stainless steel, and wood.

The ink of the present invention can be used within an ink set that comprises a plurality of inks, such as 4, 5, 6 or 7 inks, each containing a different pigment. Examples of 4-color ink sets include yellow, magenta, cyan and black sets, and yellow, magenta, cyan and white sets.

By using a photopolymerization initiator represented by the [formula 1], the ink of the present invention can be used favorably for printing onto a transparent substrate such as polycarbonate, PMMA, polypropylene, polyethylene, PET or glass. Furthermore, particularly in applications that require favorable weather resistance such as outdoor applications, the ink of the present invention can be used particularly favorably for printing onto polycarbonate, PET and polypropylene.

According to the present invention, an inkjet printing system can be used to provide a printed item that exhibits favorable stretch properties and is also free from blocking. In those cases where printing is conducted onto a flexible substrate, or those cases where deformation processing is conducted following inkjet printing, the ink of the present invention prevents blocking when ink sections overlap, meaning that even without additional equipment for conducting heat treatment or additional printing for applying a top coat, conventional equipment can be used to provide an attractive printed item.
Because the active energy beam-curable inkjet ink of the present invention exhibits excellent stretch properties and is also free from blocking, it can be used in inkjet UV printing, where deformation processing has conventionally been considered problematic, to perform processing of printed items into all manner of shapes, and moreover, to provide attractive printed items even without the use of additional equipment for conducting heat treatment or additional printing for applying a top coat. Consequently, the potential applications for the ink can be broadened considerably beyond conventional applications, to also include the printing of name plates or the like that require post-printing processing and a particular level of attractiveness. The active energy beam-curable inkjet ink of the present invention is particularly suited to printing onto non-permeable substrates, including interior or exterior printing applications that demand an attractive finish, printing onto CDs or DVDs or the like, and printing onto flexible substrates.

### EXAMPLES

As follows is a description of specifics of the present invention, based on a series of examples, although the present invention is in no way limited by these examples. In the examples, "parts" refers to "parts by weight".

First, a pigment dispersion A was prepared with the formulation shown below. The dispersion was prepared by adding the pigment and the dispersant to the monomer, conducting mixing with a high-speed mixer or the like until a uniform mixture was obtained, and then dispersing the thus obtained mill base in a horizontal sand mill for approximately one hour.
- LIONOL BLUE FG-7400G (a phthalocyanine pigment, manufactured by Toyo Ink Mfg. Co., Ltd.): 30 parts
- SOLSPERSE 32000 (a pigment dispersant, manufactured by The Lubrizol Corporation): 9 parts
- Phenoxyethyl acrylate: 61 parts

Furthermore, a pigment dispersion B was prepared with the formulation shown below. The dispersion was prepared using the same production method as that employed for the dispersion A.
- Novoperm Yellow P-HG (a benzimidazolone pigment, manufactured by Clariant Ltd.): 35 parts
- SOLSPERSE 24000 (a pigment dispersant, manufactured by The Lubrizol Corporation): 7 parts
- Phenoxyethyl acrylate: 58 parts

Furthermore, a pigment dispersion C was prepared with the formulation shown below. The dispersion was prepared using the same production method as that employed for the dispersion A.
- Hostaperm Red E5B02 (a quinacridone pigment, manufactured by Clariant Ltd.): 20 parts
- SOLSPERSE 24000 (a pigment dispersant, manufactured by The Lubrizol Corporation): 6 parts
- Phenoxyethyl acrylate: 74 parts
Furthermore, a pigment dispersion D was prepared with the formulation shown below. The dispersion was prepared using the same production method as that employed for the dispersion A.
- Special Black 350 (a carbon black pigment, manufactured by Degussa AG): 30 parts
- SOLSPERSE 32000 (a pigment dispersant, manufactured by The Lubrizol Corporation): 6 parts
- Phenoxyethyl acrylate: 64 parts

Furthermore, a pigment dispersion E was prepared with the formulation shown below. The dispersion was prepared using the same production method as that employed for the dispersion A.
- TIPAQUE PF740 (a white pigment, silica treatment: 1.0%, alumina treatment 2.0%, manufactured by Ishihara Sangyo Kaisha, Ltd.): 40 parts
- AJISPER PB821 (a pigment dispersant, manufactured by Ajinomoto-Fine-Techno Co., Inc.): 2 parts
- Phenoxyethyl acrylate: 58 parts

### Example 1 to Example 13

The raw materials shown in Table 1 were mixed together, with the materials added in sequence from the top material in the table downwards. Following mixing for two hours, the mixture was checked to confirm that no undissolved material remained, and the mixture was then filtered through a membrane filter, thereby removing any coarse particles capable of causing head blockages, and completing preparation of the ink. Using an inkjet discharge apparatus, the ink was discharged onto a polycarbonate sheet so as to form a film thickness of 10 µm. Immediately following discharge, the ink was cured by ultraviolet irradiation using an ultraviolet irradiation apparatus manufactured by Harrison Toshiba Lighting Co., Ltd. (120 W/cm, one high-pressure mercury lamp, conveyor speed: 5 m/min., 1 pass), thus forming a coating.

### Comparative Examples 1 to 5

The raw materials shown in Table 2 were mixed together, with the materials added in sequence from the top material in the table downwards. Following mixing for two hours, the mixture was checked to confirm that no undissolved material remained, and the mixture was then filtered through a membrane filter, thereby removing any coarse particles capable of causing head blockages, and completing preparation of the ink. Using an inkjet discharge apparatus, the ink was discharged onto a polycarbonate sheet so as to form a film thickness of 10 µm. Immediately following discharge, the ink was cured by ultraviolet irradiation using an ultraviolet irradiation apparatus manufactured by Harrison Toshiba Lighting Co., Ltd. (120 W/cm, one high-pressure mercury lamp, conveyor speed: 5 m/min., 1 pass), thus forming a coating.

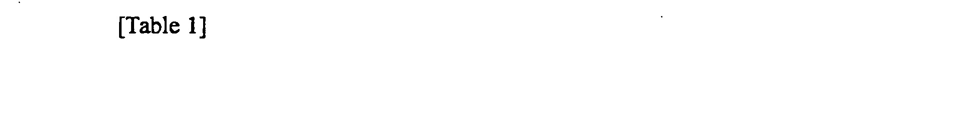

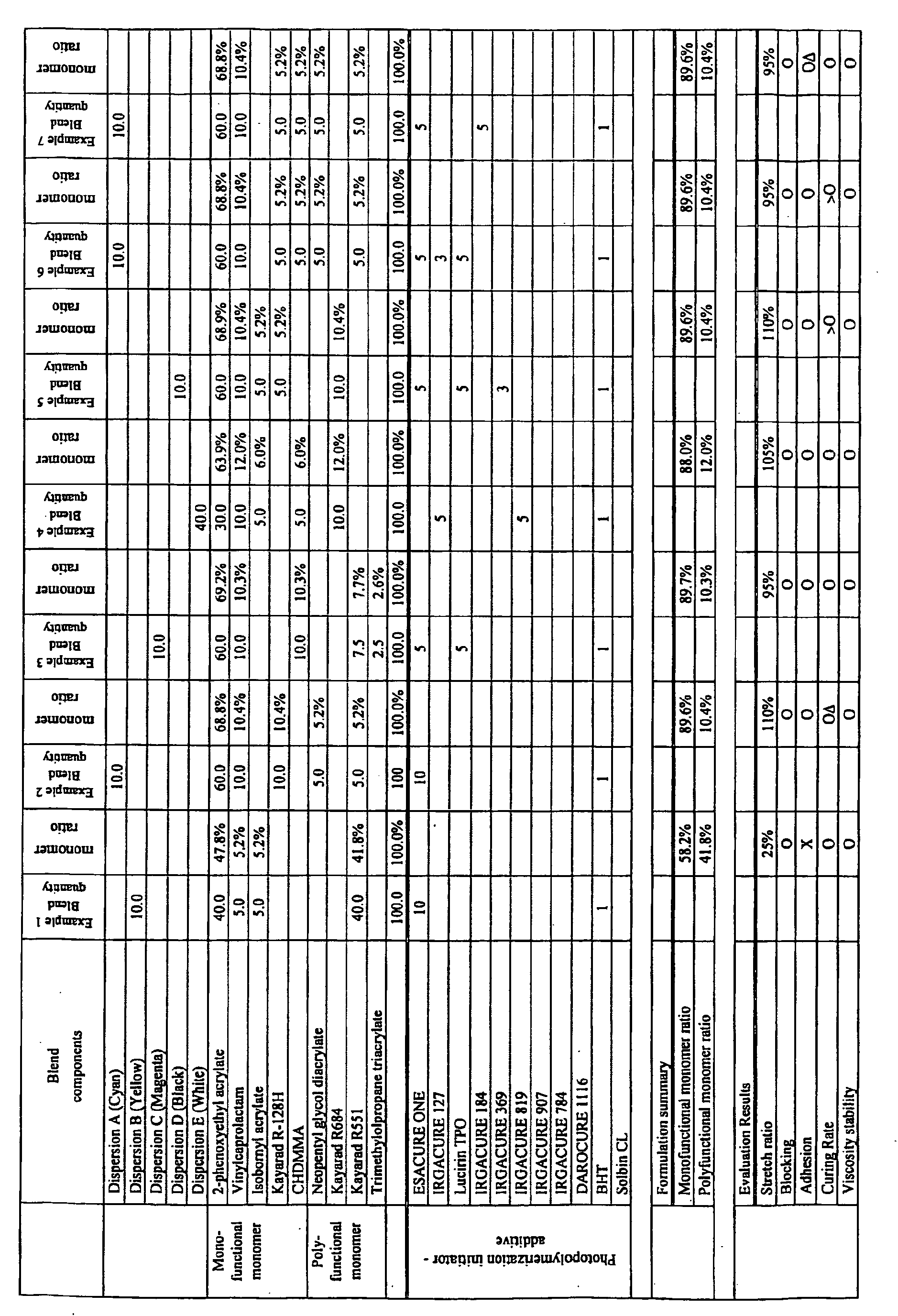

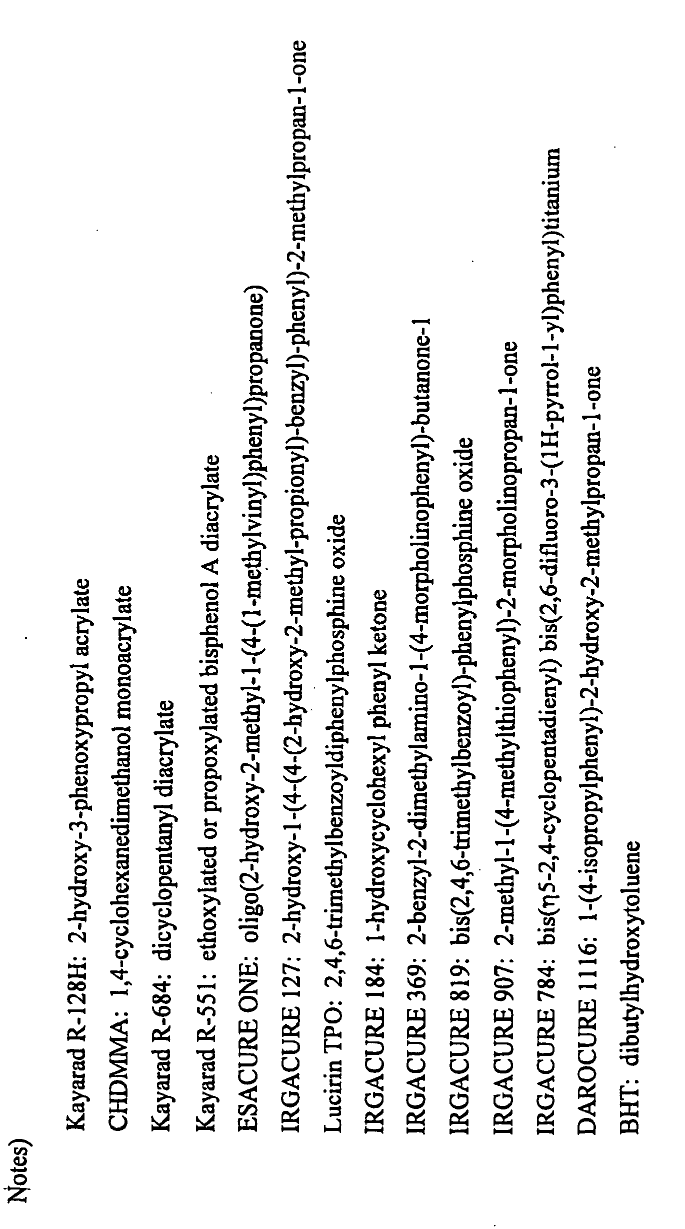

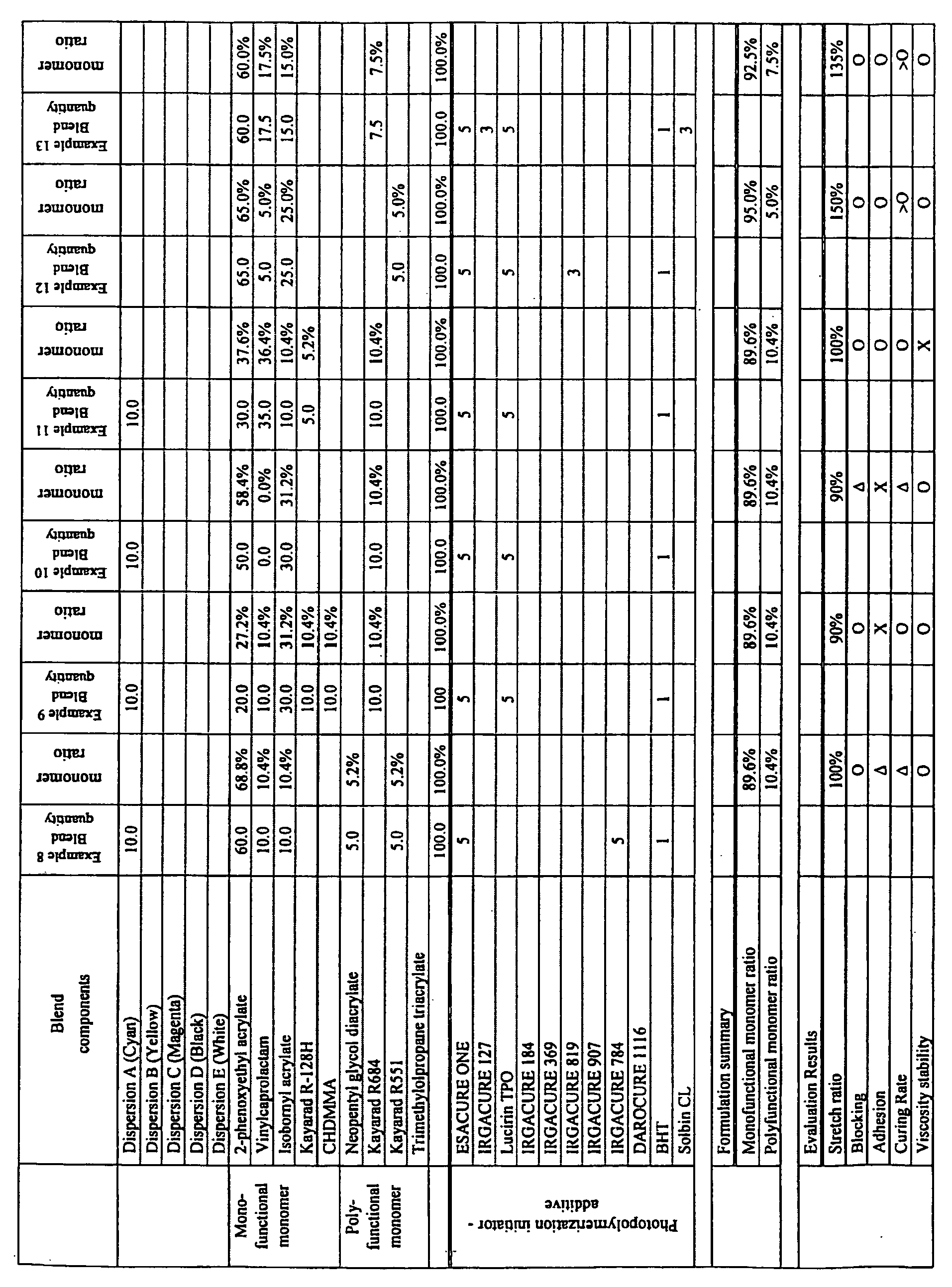

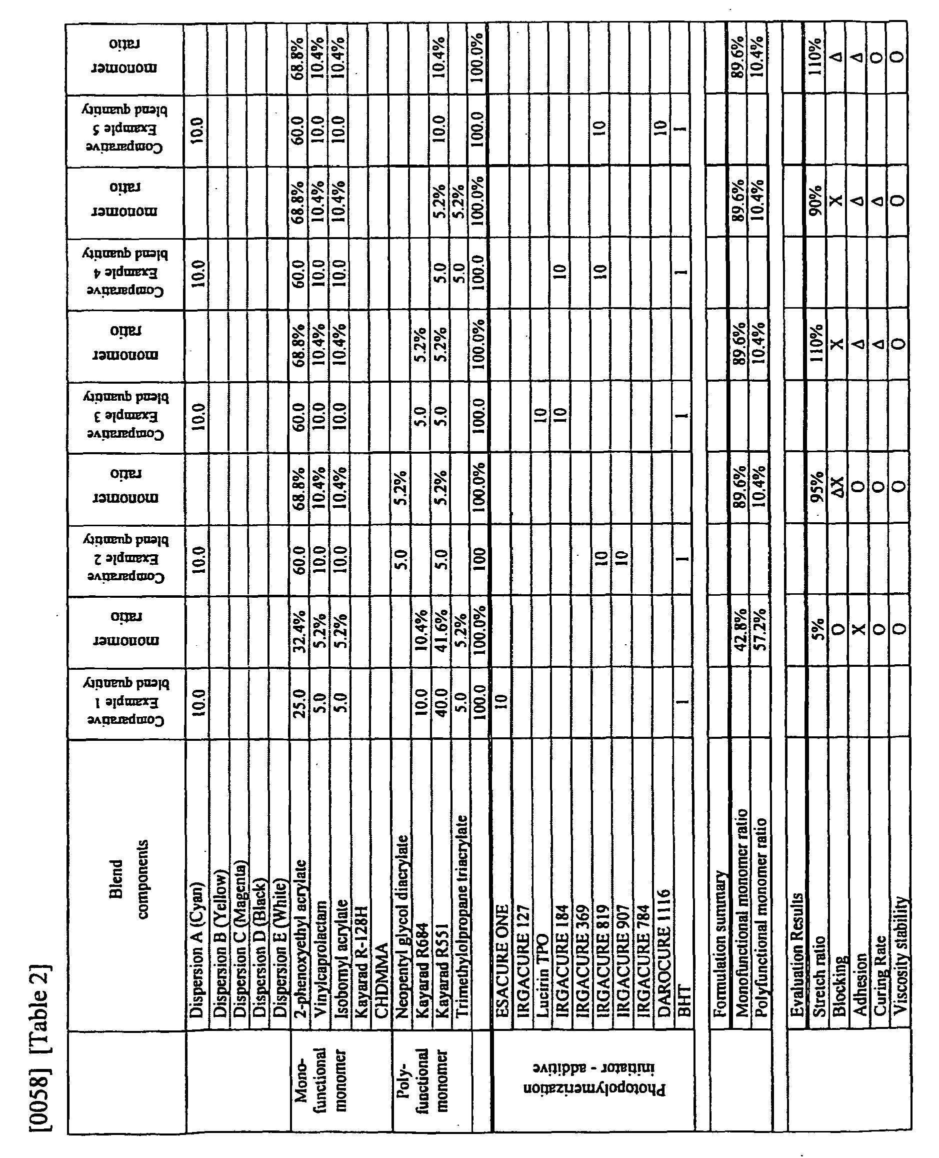

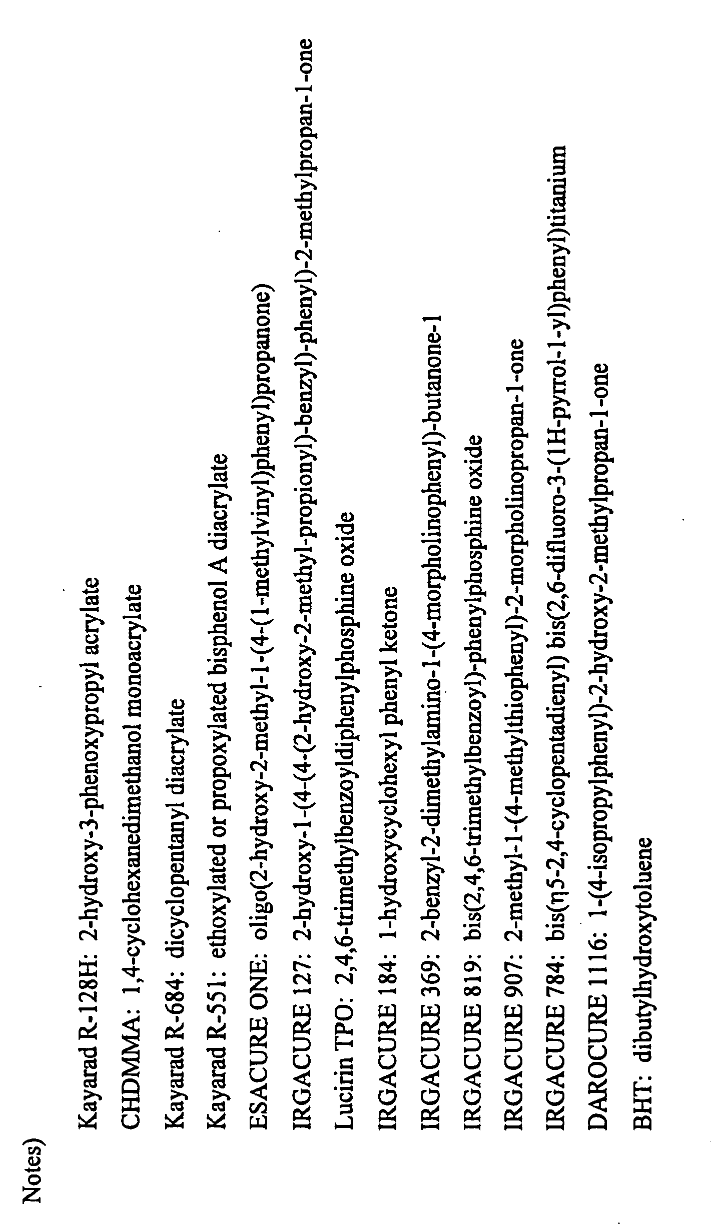

### Method of Evaluating Stretch Ratio

The coating on the polycarbonate sheet was punched out into a dumbbell shape, together with the substrate, using a punching cutter (manufactured by Dumbbell Co., Ltd.), and the resulting test piece was then heated to 170°C and subjected to a tensile test with the substrate still attached, at a strain rate of 2/min., using a Tensilon (UCT-1T, manufactured by ORIENTEC Co., Ltd.). Because ascertaining the fracture point of the coating based on the tension variation obtained from the load cell was difficult, the stretch ratio was reported as the percentage value at the point where the surface of the coating was visually confirmed to have fractured.

### Method of Evaluating Adhesion

The degree of adhesion to the substrate was determined by cross-cutting the cured coating at 1 mm intervals to form a grid of 100 squares, bonding a cellophane tape to the squares, and following rubbing of the surface of the cellophane tape with an eraser to ensure that the coating had bonded satisfactorily to the cellophane tape, peeling the cellophane tape off at an angle of 90° and determining the degree of adhesion of the coating to the substrate. The evaluation criteria were as shown below.
O: absolutely no peeling of the 100 squares was observed
OΔ: although all 100 squares remained attached, some damage to edges of the squares was visible
Δ: from 1 to 50 of the 100 squares were peeled off
ΔX: from 51 to 99 of the 100 squares were peeled off
X: all 100 squares were peeled off

### Method of Evaluating Blocking

Blocking was evaluated by superimposing a polycarbonate sheet on top of the above cured film, applying pressure with an air laminator under conditions including a linear pressure of 11.5 kgf/cm² and a speed of 0.3 m/min., and then removing the polycarbonate sheet and evaluating its state visually.
O: no transfer to the polycarbonate
Δ: slight transfer to the polycarbonate
X: considerable transfer to the polycarbonate

### Method of Evaluating Curing Rate

The curing rate was evaluated by discharging the ink using an inkjet discharge apparatus onto a polycarbonate sheet so as to form a film thickness of 10 µm, and immediately following discharge, curing the ink by ultraviolet irradiation using an ultraviolet irradiation apparatus manufactured by Harrison Toshiba Lighting Co., Ltd. (120 W/cm, one high-pressure mercury lamp), and the curing rate was calculated as the conveyor speed that generated a cured film which, when wiped with a finger immediately following exiting the irradiation apparatus, left no mark on the cured film, indicating a fully cured film. The evaluation criteria were as shown below.
>O: a curing rate of 20 m/min. or faster
O: 20 m/min.
ΔO: 10 m/min.
Δ: 5 m/min.
X: the film did not cure

### Method of Evaluating Viscosity Stability

The viscosity of the ink was measured immediately following preparation, and following an accelerated test for 2 days under an atmosphere at 60°C, the viscosity of the ink was re-measured. The evaluation criteria were as shown below.
O: The viscosity increase following the accelerated test was within 20% of the initial viscosity
X: The viscosity increase following the accelerated test was at least 20% of the initial viscosity
The viscosity measurements were conducted at 25°C and 20 rpm using an E-type viscometer.

The examples 1 to 13 are examples in which the ink contains at least 50% by weight of the monofunctional monomer, and in each case, the stretch ratio is equal to or greater than the 20% deemed to indicate suitable stretch properties, meaning each ink can be claimed to exhibit superior stretch properties. If the stretch ratio does not reach 20%, then cracking or fracture occurs even during processing such as punching or bending processes that require comparatively little deformation. Furthermore, because each of these examples uses a photopolymerization initiator represented by either the [formula 1] or the [formula 2] as the photopolymerization initiator, excellent results are also obtained in the blocking test.
In the examples 2 to 13, the quantity added of the monofunctional monomer is increased even beyond the quantity used in the example 1, and the stretch ratio is 90% or greater in each case, indicating inks with a high degree of stretchability.
The example 5 not only exhibits no blocking, superior adhesion and a superior stretch ratio, but also uses a superior combination of initiators, and therefore exhibits a dramatically improved curing rate.
In the example 6, the curing rate is accelerated dramatically by using a combination of a photopolymerization initiator represented by the [formula 1] and a photopolymerization initiator represented by the [formula 2].
In the example 7, a photopolymerization initiator having an absorption peak on the short wavelength side of 350 nm is added as the second photopolymerization initiator, and as a result, the ultraviolet light is unable to reach the interior of the film, causing a slight deterioration in the adhesion.
In the example 8, a photopolymerization initiator with an absorption spectrum having an absorption peak on the long wavelength side of 395 nm is used as the second photopolymerization initiator, and as a result, the ultraviolet light is significantly inhibited by the second photopolymerization initiator, causing a weakening of the effect of the oligo(2-hydroxy-2-methyl-1-(4-(1-methylvinyl)phenyl)propanone) that results in reductions in the curing rate and the adhesion.
In the example 9, although monofunctional monomers represent 50% by weight or greater of the polymerizable monomers, the quantity of 2-phenoxyethyl acrylate is 30% by weight or less, and as a result, the adhesion deteriorates.
In the example 10, although monofunctional monomers represent 50% by weight of the polymerizable monomers, because no vinylcaprolactam is used, the reactivity deteriorates, causing a deterioration in the curing rate, the adhesion, and the blocking.
In the example 11, although monofunctional monomers represent 50% by weight of the polymerizable monomers, because the quantity of vinylcaprolactam represents at least 30% by weight of the polymerizable monomers, the stability of the viscosity deteriorates.
In the examples 12 and 13, because the inks contain no pigments, transmittance of the ultraviolet light is not inhibited, resulting in an extremely fast curing rate.

Furthermore, the printed items obtained by conducting printing using the ink described in the example 1 and then layering a coating on top of the ink film using the ink described in the example 11 or 12 has excellent blocking properties, and also exhibits a stretchability of 37%. Moreover, when the ink of the example 1 is replaced with any of the inks from examples 2 through 11, a printed item is obtained that has a high stretchability of at least 90% as well as superior blocking properties.

In the comparative example 1, because the monofunctional monomers represent 40% by weight of the polymerizable monomers, the stretch ratio does not reach 20%, meaning the ink cannot be recognized to offer excellent stretch properties. Furthermore, the large quantity of polyfunctional monomers is also linked to a deterioration in the adhesion.
In the comparative example 2, even though the initiator reported in the patent reference 3 is added in a quantity twice that reported in the examples, the blocking evaluation is still poor.
Furthermore, in the comparative examples 3 to 5, although a combination of an acetophenone-based photopolymerization initiator similar to the compound used in the present invention, namely 1-hydroxycyclohexyl phenyl ketone or 1-(4-isopropylphenyl)-2-hydroxy-2-methylpropan-1-one, and the most favorable second photopolymerization initiator, namely 2,4,6-trimethylbenzoyldiphenylphosphine oxide or bis(2,4,6-trimethylbenzoyl)-phenylphosphine oxide, is used as the photopolymerization initiator, and is added in a quantity twice that reported in the examples, because the acetophenone-based photopolymerization initiator contains only a single cleavable portion, the evaluation of the initiator blocking is poor.
The test results for the comparative examples 2 through 5 indicate that when a photopolymerization initiator with only a single cleavable portion is used, even if the quantity added of the initiator is increased, and even if combined with another initiator, the reaction rate is not raised satisfactorily, meaning an ink that is free from blocking cannot be produced.

## Claims

1. An active energy beam-curable inkjet ink comprising a polymerizable monomer and a photopolymerization initiator, wherein the polymerizable monomer comprises at least 50% by weight of a monofunctional monomer, and the photopolymerization initiator comprises an initiator represented by [formula 1] shown below: 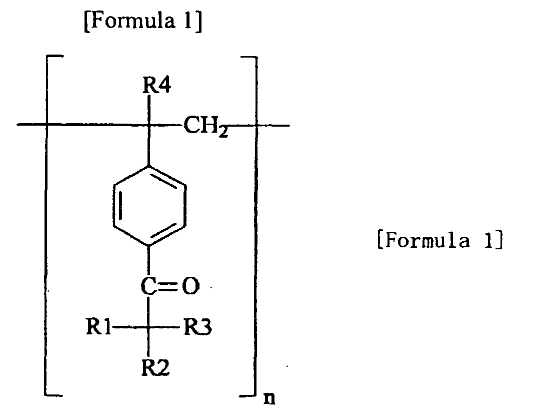 (wherein, R1, R2, R3 and R4 each represent, independently, a hydrogen atom, halogen atom, hydroxyl group, amino group, alkyl group, alkoxy group or phenyl group, and n represents an integer from 2 to 10) .

2. The active energy beam-curable inkjet ink according to claim 1, wherein the photopolymerization initiator is oligo(2-hydroxy-2-methyl-1-(4-(1-methylvinyl)phenyl)propanone).

3. The active energy beam-curable inkjet ink according to either claim 1 or 2, wherein a quantity of the photopolymerization initiator, relative to a quantity of the polymerizable monomer, is within a range from 2 to 20% by weight.

4. The active energy beam-curable inkjet ink according to any one of claims 1 through 3, further comprising a second photopolymerization initiator having an absorption peak within a wavelength range from 350 to 395 nm.

5. The active energy beam-curable inkjet ink according to claim 4, wherein the second photopolymerization initiator is 2,4,6-trimethylbenzoyldiphenylphosphine oxide or bis(2,4,6-trimethylbenzoyl)-phenylphosphine oxide.

6. The active energy beam-curable inkjet ink according to any one of claims 1 through 5, further comprising a photopolymerization initiator represented by the formula (2) shown below, 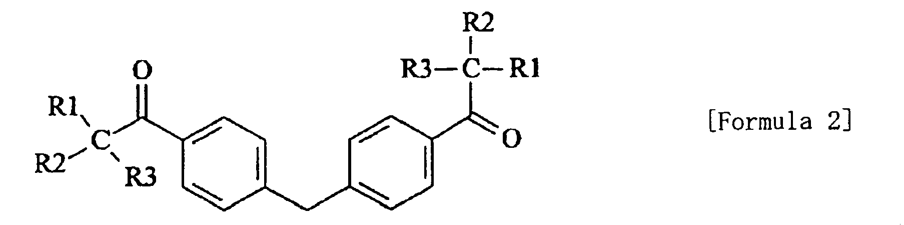 (wherein, R1, R2 and R3 each represent, independently, a hydrogen atom, halogen atom, hydroxyl group, amino group, alkyl group, alkoxy group or phenyl group).

7. The active energy beam-curable inkjet ink according to claim 6, wherein the photopolymerization initiator is 2-hydroxy-1-(4-(4-(2-hydroxy-2-methyl-propionyl)-benzyl)-phenyl)-2-methylpropan-1-one.

8. The active energy beam-curable inkjet ink according to any of the claims 5 through 7, wherein the ink further comprises 2-benzyl-2-dimethylamino-1-(4-morpholinophenyl)-butanone-1.

9. The active energy beam-curable inkjet ink according to any one of claims 1 through 8, wherein the polymerizable monomer comprises at least 30% by weight of 2-phenoxyethyl acrylate.

10. The active energy beam-curable inkjet ink according to any one of claims 1 through 9, wherein the polymerizable monomer comprises from 5 to 30% by weight of N-vinyl-2-caprolactam.

11. A printed item obtained by printing the active energy beam-curable inkjet ink according to any one of claims 1 through 10 onto a printing substrate.

## Patentansprüche

1. Mittels Aktiv-Energie-Strahlung härtbare Tintenstrahl-Tinte, umfassend ein polymerisierbares Monomer und einen Photopolymerisations-Initiator, worin das polymerisierbare Monomer wenigstens 50 Gewichts-Prozent eines monofunktionalen Monomers umfasst und der Photopolymerisations-Initiator einen Initiator umfasst, der durch die nachfolgend gezeigte [Formel 1] wiedergegeben wird: 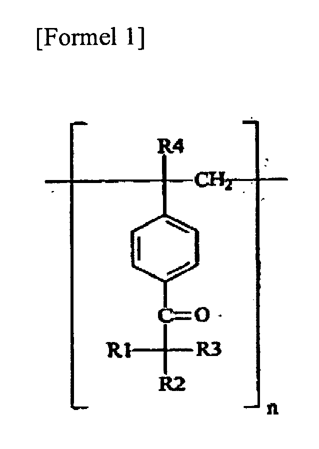 (worin R1, R2, R3 und R4 jeweils unabhängig voneinander stehen für ein Wasserstoff-Atom, ein Halogen-Atom, eine Hydroxyl-Gruppe, eine Amino-Gruppe, eine Alkyl-Gruppe, eine Alkoxy-Gruppe oder eine Phenyl-Guppe, und n für eine ganze Zahl von 2 bis 10 steht).

2. Mittels Aktiv-Energie-Strahlung härtbare Tintenstrahl-Tinte nach Anspruch 1, worin der Photopolymerisations-Initiator Oligo-(2-hydroxy-2-methyl-1-(4-(1-methylvinyl-)phenyl-)propanon) ist.

3. Mittels Aktiv-Energie-Strahlung härtbare Tintenstrahl-Tinte entweder nach Anspruch 1 oder nach Anspruch 2, worin die Menge des Photopolymerisations-Initiators, bezogen auf die Menge des polymerisierbaren Monomers, innerhalb eines Bereichs von 2 bis 20 Gewichts-Prozent liegt.

4. Mittels Aktiv-Energie-Strahlung härtbare Tintenstrahl-Tinte nach irgendeinem der Ansprüche 1 bis 3, weiter umfassend einen zweiten Photopolymerisations-Initiator, der einen Absorptions-Peak innerhalb eines Wellenlängen-Bereichs von 350 bis 395 nm aufweist.

5. Mittels Aktiv-Energie-Strahlung härtbare Tintenstrahl-Tinte nach Anspruch 4, worin der zweite Photopolymerisations-Initiator 2,4,6-Trimethylbenzoyldiphenylphosphinoxid oder Bis-(2,4,6-trimethylbenzoyl-) phenylphosphinoxid ist.

6. Mittels Aktiv-Energie-Strahlung härtbare Tintenstrahl-Tinte nach irgendeinem der Ansprüche 1 bis 5, weiter umfassend einen Photopolymerisations-Initiator, der wiedergegeben wird durch die nachfolgend gezeigte Formel (2): 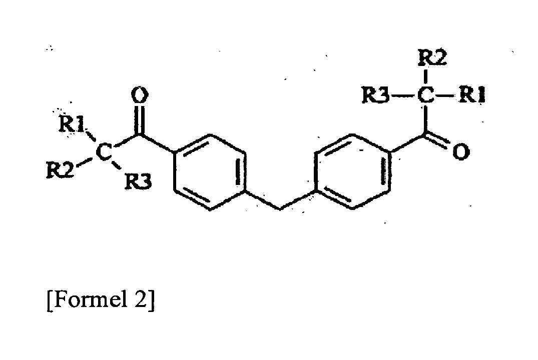 (worin R1, R2 und R3 jeweils unabhängig voneinander stehen für ein Wasserstoff-Atom, ein Halogen-Atom, eine Hydroxyl-Gruppe, eine Amino-Gruppe, eine Alkyl-Gruppe, eine Alkoxy-Gruppe oder eine Phenyl-Gruppe).

7. Mittels Aktiv-Energie-Strahlung härtbare Tintenstrahl-Tinte nach Anspruch 6, worin der Photopolymerisations-Initiator ist: 2-Hydroxy-1-(4-(4-(2-hydroxy-2-methyl-propionyl-)benzyl-)phenyl-)2-methylpropan-1-on.

8. Mittels Aktiv-Energie-Strahlung härtbare Tintenstrahl-Tinte nach irgendeinem der Ansprüche 5 bis 7, worin die Tinte weiter 2-Benzyl-2-dimethylamino-1-(4-morpholinophenyl-)butanon-1 umfasst.

9. Mittels Aktiv-Energie-Strahlung härtbare Tintenstrahl-Tinte nach irgendeinem der Ansprüche 1 bis 8, worin das polymerisierbare Monomer wenigstens 30 Gewichts-Prozent 2-Phenoxyethylacrylat umfasst.

10. Mittels Aktiv-Energie-Strahlung härtbare Tintenstrahl-Tinte nach irgendeinem der Ansprüche 1 bis 9, worin das polymerisierbare Monomer 5 bis 30 Gewichts-Prozent N-Vinyl-2-caprolactam umfasst.

11. Gedruckter Gegenstand, erhalten durch Drucken der mittels Aktiv-Energie-Strahlung härtbaren Tintenstahl-Tinte nach irgendeinem der Ansprüche 1 bis 10 auf ein Druck-Substrat.

## Revendications

1. Encre pour jet d'encre à séchage par faisceau d'énergie active comprenant un monomère polymérisable et un initiateur de photopolymérisation, dans laquelle le monomère polymérisable comprend au moins 50% en poids d'un monomère monofonctionnel, et l'initiateur de photopolymérisation comprend un initiateur représenté par la [formule 1] présentée ci-dessous : 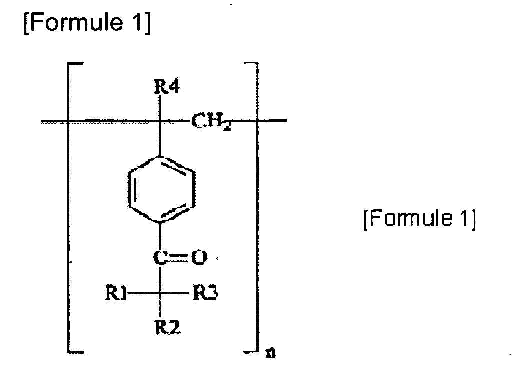 (dans laquelle, R1, R2, R3 et R4 représentent chacun, de manière indépendante, un atome d'hydrogène, un atome d'halogène, un groupe hydroxyle, un groupe amino, un groupe alkyle, un groupe alcoxy ou un groupe phényle, et n représente un nombre entier de 2 à 10).

2. Encre pour jet d'encre à séchage par faisceau d'énergie active selon la revendication 1, dans laquelle l'initiateur de photopolymérisation est l'oligo(2-hydroxy-2-méthyl-1-(4-(1-méthylvinyl)phényl)propanone).

3. Encre pour jet d'encre à séchage par faisceau d'énergie active selon l'une quelconque de la revendication 1 ou 2, dans laquelle une quantité de l'initiateur de photopolymérisation, par rapport à une quantité du monomère polymérisable, est dans une plage de 2 à 20% en poids.

4. Encre pour jet d'encre à séchage par faisceau d'énergie active selon l'une quelconque des revendications 1 à 3, comprenant en outre un deuxième initiateur de photopolymérisation ayant un pic d'absorption dans une plage de longueurs d'onde de 350 à 395 nm.

5. Encre pour jet d'encre à séchage par faisceau d'énergie active selon la revendication 4, dans laquelle le deuxième initiateur de photopolymérisation est l'oxyde de 2,4,6-triméthylbenzoyldiphénylphosphine ou l'oxyde de bis(2,4,6-triméthylbenzoyl)-phénylphosphine.

6. Encre pour jet d'encre à séchage par faisceau d'énergie active selon l'une quelconque des revendications 1 à 5, comprenant en outre un initiateur de photopolymérisation représenté par la formule (2) présentée ci-dessous, 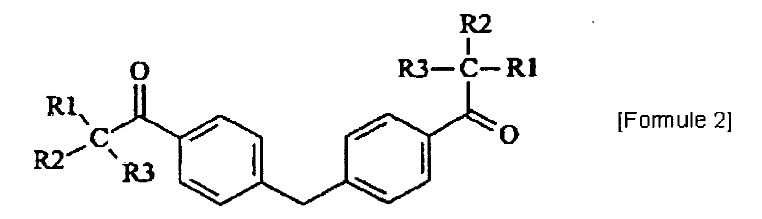 (dans laquelle, R1, R2 et R3 représentent chacun, de manière indépendante, un atome d'hydrogène, un atome d'halogène, un groupe hydroxyle, un groupe amino, un groupe alkyle, un groupe alcoxy ou un groupe phényle).

7. Encre pour jet d'encre à séchage par faisceau d'énergie active selon la revendication 6, dans laquelle l'initiateur de photopolymérisation est la 2-hydroxy-1-(4-(4-(2-hydroxy-2-méthyl-propionyl)-benzyl)-phényl)-2-méthylpropan-1-one.

8. Encre pour jet d'encre à séchage par faisceau d'énergie active selon l'une quelconque des revendications 5 à 7, dans laquelle l'encre comprend en outre de la 2-benzyl-2-diméthylamino-1-(4-morpholinophényl)-butanone-1.

9. Encre pour jet d'encre à séchage par faisceau d'énergie active selon l'une quelconque des revendications 1 à 8, dans laquelle le monomère polymérisable comprend au moins 30% en poids d'acrylate de 2-phénoxyéthyle.

10. Encre pour jet d'encre à séchage par faisceau d'énergie active selon l'une quelconque des revendications 1 à 9, dans laquelle le monomère polymérisable comprend de 5 à 30% en poids de N-vinyl-2-caprolactame.

11. Article imprimé obtenu par impression de l'encre pour jet d'encre à séchage par faisceau d'énergie active selon l'une quelconque des revendications 1 à 10 sur un substrat d'impression.
